(19) Europäisches Patentamt
European Patent Office
Office européen des brevets

(11) **EP 1 661 315 B1**

(12) **EUROPEAN PATENT SPECIFICATION**

(45) Date of publication and mention
of the grant of the patent:
**16.01.2008 Bulletin 2008/03**

(51) Int Cl.:
*H04L 12/28* (2006.01)        *H04J 15/00* (2006.01)
*H04J 13/02* (2006.01)        *H04B 1/707* (2006.01)
*H04J 14/00* (2006.01)

(21) Application number: **04743973.2**

(22) Date of filing: **08.07.2004**

(86) International application number:
**PCT/IB2004/002312**

(87) International publication number:
**WO 2005/018159 (24.02.2005 Gazette 2005/08)**

(54) **RATE DIVISION MULTIPLE ACCESS (RDMA) SCHEME**

SCHEMA FÜR RATENMULTIPLEX-MEHRFACHZUGRIFF (RDMA)

MODE D'ACCES MULTIPLE PAR REPARTITION DE TAUX (RDMA)

(84) Designated Contracting States:
**AT BE BG CH CY CZ DE DK EE ES FI FR GB GR
HU IE IT LI LU MC NL PL PT RO SE SI SK TR**

(30) Priority: **19.08.2003 EP 03405602**

(43) Date of publication of application:
**31.05.2006 Bulletin 2006/22**

(73) Proprietor: **International Business Machines
Corporation
Armonk, NY 10504 (US)**

(72) Inventors:
• **HIRT, Walter
CH-8907 Wettswil (CH)**
• **WEISENHORN, Martin
CH-8803 Rueschlikon (CH)**

(74) Representative: **Toleti, Martin
IBM Research GmbH
Zurich Research Laboratory
Säumerstrasse 4 / Postfach
8803 Rüschlikon (CH)**

(56) References cited:
**US-A- 5 619 492**

• CHEN X H ET AL: "Multiple chip-rate DS/CDMA system and its spreading code dependent performance analysis" IEE PROCEEDINGS : COMMUNICATIONS, INSTITUTION OF ELECTRICAL ENGINEERS, GB, vol. 145, no. 5, 13 October 1998 (1998-10-13), pages 371-377, XP006010927 ISSN: 1350-2425
• CHEN X H ET AL: "BER performance analysis using co-channel interference Bernoulli model in a dual-chip rate DS/CDMA system with parallel correlator" SPREAD SPECTRUM TECHNIQUES AND APPLICATIONS PROCEEDINGS, 1996., IEEE 4TH INTERNATIONAL SYMPOSIUM ON MAINZ, GERMANY 22-25 SEPT. 1996, NEW YORK, NY, USA,IEEE, US, 22 September 1996 (1996-09-22), pages 1068-1072, XP010208782 ISBN: 0-7803-3567-8
• CHEN X H ET AL: "USING CODE SENSING AND CHIP RATE DIVISION TECHNIQUES TO IMPROVE STABILITY AND THROUGHPUT-DELAY PERFORMANCE FOR DISTRIBUTED DS/SSMA WIRELESS NETWORKS" WIRELESS PERSONAL COMMUNICATIONS, KLUWER ACADEMIC PUBLISHERS, NL, vol. 1, no. 3, 1994, pages 191-209, XP000513023 ISSN: 0929-6212

## Description

### Field of Invention

The present invention relates to a method and system for communicating via transmission signals in a multiple-user communication system comprising multiple user devices and an access point device. The transmission signals, also referred to as rate division multiple access (RDMA) signals, enable implementations of efficient multiple-user communication, identification, sensor or localization systems and networks. Moreover, a method for generating transmission signals for multiple-user communication is provided. Specific sets of RDMA signals enable the construction of a new class of multiple-user systems and networks using the ultra-wideband (UWB) radio channel, for example, in the band between 3.1 GHz and 10.6 GHz.

### Background

Short-range wireless technologies in the wireless local area network (WLAN) space as well as wireless personal and body area networks (WPAN and WBAN) continue to proliferate rapidly. Similarly, wired and wireless as well as mixed networks linking a variety of sensors and/or identification tags are just beginning to be deployed with an unprecedented future market potential. Typically, these conventional systems operate license-free within narrow but designated radio spectrum bands. To mitigate the threat of a future spectrum shortage in view of the rapidly growing user and device population and to enable new applications based on wireless data transmission as well as asset localization and tracking, additional radio spectrum in the form of the ultra-wideband (UWB) radio channel was recently made available for use in the USA in the range 3.1 GHz - 10.6 GHz.

Similarly, optical communication and sensor networks continue to proliferate further, moving into novel application areas, such as Intelligent Transport Systems. Typically, an optical channel is very wideband and optical communication systems use some kind of pulse modulation to transmit information. Thus pulse modulated optical signals can potentially also be used to provide multi-user access mechanisms or sensing and localization capabilities.

An important aspect in the development of future radio-frequency or optical communication systems operating over a very wide radio or optical frequency channel is the channel's inherent capability to support a very large number of simultaneously active devices. Thus, multi-user communication is of significant importance for both types of channels, creating a need for a more efficient multi-user channel access method than those presently known.

### Prior Art and Problem Description

Designers of communication, identification or localization systems and networks based on ultra-wideband radio technology (UWB-RT) are faced with the problem of choosing the best possible multi-user access methodology that not only leverages the benefits of UWB-RT, but also satisfies the regulatory conditions. There exist two different scenarios where multi-user problems occur: a) user access to and between (partially) co-located similar networks (e.g., so-called piconets) and b) multiple user or device access within a single cell network (e.g., personal area). All of these scenarios require an efficient channel access method. System designers typically make use of one or a combination of two out of four known multiple access (MA) methods. These known methods are briefly described hereafter, listing their known features and suitability when applied to networks with terminals based on UWB-RT.

*Frequency Division Multiple Access (FDMA)*

FDMA assigns different spectrum bands to participating users or terminals where they can transmit and receive corresponding radio signals. FDMA requires a high implementation complexity when terminals need to access different overlapping piconets (e.g., each terminal requires multiple pulse generators and filters). Poor channel isolation produces spectral side-lobe overlaps between adjacent bands that potentially degrade system performance. In addition, the introduction of multiple bands leads to a required power reduction compared to the single-band approach that was originally promoted by the FCC (e.g., use of three bands leads to a 5 dB reduction in transmitted power relative to a single-band system, where up to 7.5 GHz bandwidth could be used); this power reduction diminishes key advantages of UWB-RT, such as robustness in multipath situations.

*Time Division Multiple Access (TDMA)*

TDMA assigns different time slots to participating users or terminals where they can transmit and receive corresponding radio signals; the time division can take place at the packet level (i.e., successive reservation time slots hold entire data packets) or at the symbol level (i.e., interleaved reservation time slots hold only entire pulses). At the packet level, contention-free or contention-based (CSMA, i.e., carrier sense multiple access) schemes can be implemented; similarly, with interleaved TDMA, a choice between synchronous or asynchronous assignment of time slots exists. While terminals operating within synchronous or contention-based systems require a common time base, terminals within asynchronous and contention-free systems may suffer from an increased signal collision overhead. Although TDMA enables relatively easy coordination of terminals operating within a single piconet, this method is considered not a good choice for different piconets, since added coordination between these networks is required. Finally, TDMA scales poorly with increasing number of terminals.

*Code Division Multiple Access (CDMA)*

CDMA is based on coded sequences to enable simultaneous, multiple-user access within a network or across piconets. The code sequences are usually designed for optimal cross-correlation and auto-correlation properties as well as to control the shape of the emitted signal spectrum. CDMA is generally a good choice for devices based on UWB-RT, since it is compatible with low-voltage integrated circuit (IC) process technology when using relatively high duty cycle signals (i.e., low peak-to-average power ratios are obtained). CDMA achieves good performance in the presence of multi-access interference (MAI) or, equivalently, inter-channel interference (ICI). CDMA allows for high aggregate data rates and tends to operate with a high chip rate, thereby also deriving advantages from the use of multiple pulses (also called "chips") per data symbol. However, this very need to transmit multiple pulses per symbol to achieve high processing gain is a disadvantage when high data rates are to be obtained. CDMA offers good scalability of the aggregate data rate because ICI appears as a Gaussian process for sufficiently long codes, whereas ICI based on interleaved TDMA signals does not look Gaussian at high data rates.
US Patent 6,088,347 describes a method of communicating multiple signals over a common communications link by modulating first input signals with respective first codes of low cross-correlation to obtain a first set of modulated signals at a first chip rate. The second input signals are of a data rate higher than the first input signals, and the second codes are of a dimension greater than the first codes. The second input signal or signals are modulated with respective second codes of low cross correlation relative to each other and relative to the first codes, resulting in a second set of modulated signals at a second chip rate such that there is spectral overlap between the first and second sets of modulated signals. The first and second sets of modulated signals are preferably modulated with different noise signals to spread the spectrum of each. In an embodiment, the first and second codes are Walsh codes of different dimensions. This patent describes an improved CDMA system, which diminishes the drawback of a conventional CDMA system of having only a very limited number of codes with good orthogonality properties at its disposal. The method described in this patent, however, possesses the same basic disadvantage as ordinary CDMA, i.e., the need to transmit multiple pulses per symbol to achieve high processing gain is a disadvantage when high data rates are to be obtained.

*Optical Code Division Multiple Access* (*OCDMA*)

As indicated in the paper "Optical code division multiple access: challenges and solutions," by L. R. Chen and published in Proc. SPIE - Int. Soc. Opt. Eng. (USA) Vol. 4833, 2002, pages 1159-68, of the Int. Conf. on Applications of Photonic Technology, Quebec City, Que., Canada, 1-6 June, 2002, OCDMA is a technique well suited for providing photonic connectivity in local access networks. However, although the principles of OCDMA have been known for many years, it has never delivered on its potential. The paper describes key challenges and impediments that have prevented OCDMA to succeed. The author proposes solutions including the use of multi-dimensional codes, such as two-dimensional wavelength-time codes combined with differential detection, to enable high performance OCDMA systems with large numbers of users operating with a high aggregate capacity. However, while these solutions provide a desired performance improvement, they lead to rather complex and costly optical access networks. In fact, OCDMA system designers have to cope with problems similar to those encountered when designing CDMA radio systems.
Among the four multiple access techniques outlined above, methods based on CDMA are often preferable for systems based on UWB-RT. For example, multiple piconets can operate relatively independent under a CDMA regime. A modulation scheme for UWB impulse radio (UWB-IR) enabling multi-user communication much discussed in the literature is time-hopping (TH) pulse position modulation (PPM), hereafter abbreviated as TH-PPM. These signals consist of pulses placed at certain positions along the time axis, where a specific pulse position depends on the user's payload data and a user-specific pseudo random sequence (PRS). The purpose of the PRS is to make the users distinguishable and to whiten the radiated signal spectrum. An additional feature of TH-PPM is that a single data symbol may determine the positions of $N$ successive pulses, thereby introducing a kind of $N$-fold repetition coding. This approach provides the advantage that a receiver can increase the corresponding received signal energy per data symbol to achieve an improved error rate performance; typically, values for $N$ up to a thousand or more have been proposed. However, the reduced achievable data rate is a recognized drawback of this version of TH-PPM.
Prior art TH-PPM has been widely described and analyzed in the recent past, for example, in a paper by M.

Z. Win and R. A. Scholtz with the title "Ultra-Wide Bandwidth Time-Hopping Spread-Spectrum Impulse Radio for Wireless Multiple Access Communications" and published in IEEE Transactions on Communications, April 2000. This so-called *dithered* TH-PPM scheme allows different transmitting users to be distinguishable at a receiver by assigning user-specific pseudo random TH sequences (PR-THS). As a result, correct detection of a transmitter's data at the corresponding receiver can only be accomplished provided that the receiver circuitry is locked to the corresponding PR-THS. Thus, acquisition and maintenance of synchronization of the TH-PRS are inherently complex processes that can cause significant processing delay and/or undue hardware requirements when implementing fast synchronization procedures. Moreover, acquisition of the timing phase of afore mentioned dithered TH-PPM signals may require long preambles and tracking of the timing phase during data detection may become difficult or unreliable when using a high pulse rate.

The use of long polarity randomization codes eliminates the spectral lines of dithered TH-PPM and also assures that the spectrum of the composite signal is equal to the spectrum of the basic pulse. However, the *spectral properties* of the transmitted signal are not the only criteria when designing UWB radio signals for multiple access purposes. Although the use of long code words or spreading sequences can simplify the spectrum design, it also complicates the design of many components within a CDMA based system, such as the design of equalizers, code acquisition and tracking, and multiple-user detection, to name a few.

From the above it follows that there is still a need in the art for improved multi-user communication. The signaling scheme should allow an implementation of an efficient multiple-user access or communication system.

## Summary and Advantages of the Invention

In the following, a multiple-user access method and system for improved multi-user communication is presented using transmission signals which herein are also referred to rate division multiple access (RDMA) signals. Hereafter, the general multiple-access scheme - based on the *Rate* dimension - will be denoted as *Rate Division Multiple Access* (RDMA).

An impulse radio transceiver for full duplex ultrawide-band communications using RDMA signals is described in U.S Pat. No. 5.687.169.

In accordance with the present invention, there is provided a method for communicating via transmission signals $u_m(t)$ in a multiple-user communication system comprising multiple user devices and an access point device. Each of the transmission signals has a defined pulse rate $1/T_m$, with $T_m$ being the pulse period and $m = 1, 2, 3, ... M$. The method comprises the steps of using a first pulse rate $1/T_1$ for a first user device to communicate to the access point device; and for each additional user device, using yet a further pulse rate $1/T_i$ that is different to each other pulse rate $1/T_m$ in use, with $i = 1, 2, 3, ... M$, where $m \neq i$, to communicate with the access point device. M corresponds to the maximum number of user devices: the pulse period $T_m$, where the pulse period $T_m$ is a product of a base period T and an integer value $N_m$ that herein is also referred to as period number $N_m$, is chosen such that the integer value $N_m$ comprises at least one prime factor that is unique among the sets of prime factors of any other period number $N_i$, with $i \neq m$, because this guaranties a limited maximum probability of any transmission signal to collide with another desired transmission signal.

In an embodiment, multiple-user communication via transmission signals $u_m(t)$ with at least three user devices can comprise the steps of choosing a first pulse rate $1/T_1$ for a first user device, choosing a second pulse rate $1/T_2$ for a second user device, where the second pulse rate $1/T_2$ is different to the first pulse rate $1/T_1$, and for each additional user device, choosing yet another pulse rate that is different to the chosen pulse rates.

The transmission signals of the multiple user devices can be differentiated based on the pulse rate $1/T_i$ of received transmission signals $s_i(t)$ at the access point device. This has the advantage that the various user devices can be detected and identified even before an address of the device is received or realized.

Each integer value $N_m$ can comprise a set of prime factors (PF) where the intersection of at least two sets of prime factors is empty. This leads to an even lower maximum probability of collisions among the desired signals.

In a further embodiment, the prime factors of any new integer number $N_m$ can be generated by choosing their prime factors to be different to the prime factors in an updated list of prime factors (LPF). This can be implemented by an algorithm for the generation of relatively prime numbers $N_m$ and thus to generate suitable pulse periods $T_m = N_m T$, which allow to design an efficient rate division multiple access system (RDMA).

In accordance with another aspect of the present invention, there is provided a method for generating transmission signals $u_m(t)$ for multiple-user communication. Each of the transmission signals has a defined pulse rate $1/T_m$, with $T_m$ being the pulse period and $m = 1, 2, 3, ..., M$. The method comprises the steps of generating a first transmission signal $u_1(t)$ comprising a first pulse rate $1/T_1$ for a first user device; and for each additional user device, generating yet a further transmission signal $u_i(t)$ comprising a further pulse rate $1/T_i$ that is different to each other pulse rate $1/T_m$ in use, with $i = 1, 2, 3, ..., M$, where $m \neq i$:the pulse period $T_m$, where the pulse period $T_m$ is a product of a base period T and an integer value $N_m$ that herein is also referred to as period number $N_m$, is chosen such that the integer value $N_m$ comprises at least one prime factor that is unique among the sets of prime factors of any other period number $N_i$, with

$i \neq m$, because this guaranties a limited maximum probability of any transmission signal to collide with another desired transmission signal.

It is also advantageous to generate the transmission signal $u_m(t)$ for each user device with at least two different pulse rates, e.g. with $1/T_{m,1}$, $1/T_{m,2}$. Thereby the average data rate or throughput should be approximately the same for each user device for equality reasons.

In accordance with a further aspect of the present invention, there is provided an access point device for receiving transmission signals $u_m(t)$ from multiple user devices, each of the transmission signals having a defined pulse rate $1/T_m$, with $T_m$ being the pulse period and $m = 1, 2, 3, ... M$. The access point (AP) device comprises a receiver that detects from received transmission signals $s_m(t)$ a first user device using a first pulse rate $1/T_1$ and each additional user device using yet a further pulse rate $1/T_i$ that is different to each other pulse rate $1/T_m$ in use, with $i = 1, 2, 3, ... M$, where $m \neq i$. Further, the access point device (AP) can comprise a transmitter for generating individual pulse rates $1/T_m$ to communicate with each individual user device. This allows a bi-directional communication between the access point device (AP) and each individual user device using user-device-specific pulse rates.

It is further possible that the transmitter generates a transmit signal with a common pulse rate $1/T_{AP}$ that is receivable by each of the multiple user devices having receiving means implemented. This would allow a broadcast mode, where all user devices can be reached.

In accordance with another aspect, a user device $U_m$ generates and transmits a transmission signal $u_m(t)$. The transmission signal has an individual pulse rate $1/T_m$, with $T_m$ being the individual pulse period and $m$ an element of 1, 2, 3, ... $M$. The device comprises a transmitter that generates the individual pulse rate $1/T_m$ to communicate with an access point (AP) device. The access point (AP) device is adapted to detect from received transmission signals $s_m(t)$ the user device $U_m$ using the individual pulse rate $1/T_m$ and each additional user device $U_i$ using yet a further pulse rate $1/T_i$ that is different to each other pulse rate $1/T_m$ in use, with $i = 1, 2, 3, ... M$, where $m \neq i$.

In accordance with yet another aspect of the present invention, there is provided a multiple-user communication system for communicating via transmission signals $u_m(t)$. The system comprises an access point device for receiving the transmission signals $u_m(t)$ from multiple user devices, thereby each of the transmission signals has a defined pulse rate $1/T_m$, with $T_m$ being the pulse period and $m = 1, 2, 3, ... M$. The system further comprises a first user device using a first pulse rate $1/T_1$ for communicating to the access point device and each additional user device using yet a further pulse rate $1/T_i$ that is different to each other pulse rate $1/T_m$ in use, with $i = 1, 2, 3, ... M$, where $m \neq i$, to communicate to the access point device. The access point device differentiates the $i$-th user device based on the pulse rate $1/T_i$ of the received transmission signal $s_i(t)$: the pulse period $T_m$, where the pulse period $T_m$ is a product of a base period $T$ and an integer value $N_m$ that herein is also referred to as period number $N_m$, is chosen such that the integer value $N_m$ comprises at least one prime factor that is unique among the sets of prime factors of any other period number $N_i$, with $i \neq m$, because this guaranties a limited maximum probability of any transmission signal to collide with another desired transmission signal.

The multiple-user communication system can be used for communication, identification, or localization, and in particular in connection with an Ultra-Wideband (UWB) radio system applying the principles of UWB-RT or an infrared (IR) communication system applying the principles of infrared technology.

The system offers improved features that alleviate certain key disadvantages of known systems based on FDMA, TDMA and CDMA methods. The present methods and system for the communication and generation of RDMA signals are well suited for the transmission and reception of RDMA signals over the UWB radio channel. For example, based on this class of RDMA signals, each user device transmits a binary antipodal signal, preferably with a low duty cycle, that can be distinguished at the destination receiver by an appropriate, unique choice of a user-specific pulse rate or a combination of at least two user-specific pulse rates.

It might be advantageous in certain applications to combine the features and benefits of the RDMA with one or more of the known multiple access methods described above.

Assuming some constant level of multi-access interference (MAI) or, equivalently, inter-channel interference (ICI) and provided that the RDMA pulse rates are chosen accordingly, the average probability that RDMA signals emitted by different users collide and thus interfere with each other at a specific receiver location can be shown to be numerically identical with the collision probability of prior art TH-PPM signals emitted and received under the same conditions. Based on a measure for the sensitivity of these collision probabilities to deviations from the predefined user-specific pulse rates, RDMA was found to be sufficiently robust. Furthermore, multiple-user wireless systems based on the RDMA method can be implemented with or without power control, depending on specific application or regulatory requirements.

Multi-user or multiple-user communication systems and networks designed under the principles of the presented RDMA for non-synchronized users, each transmitting binary antipodal pulse modulated signals with a user-specific pulse rate, are of particular interest hereafter. Provided that the pulse rate of each user device is chosen according to the presented RDMA, the probability that RDMA signals emitted by different user devices collide at a specific receiver location will be minimal in an optimal sense, independent of the status of synchronism between user devices. A reduction of the RDMA principle to a single user results in a point-to-point communication link based on binary antipodal signaling, also known as binary phase shift keying (BPSK). The power spectral density (PSD) of such signals contains no spectral lines as long as the modulating data sequence is uncorrelated, a condition that can always be achieved in practice to an arbitrary degree by using a suitable data scrambler or randomizer.

In general, the proposed RDMA provides the following features and advantages compared to the prior art when solving problems related to multiple-user access in co-located but similar networks (e.g., so-called piconets) or within a single-cell network (e.g., personal area)

In contrast to known FDMA schemes, the RDMA scheme leads to a reduced implementation complexity, particularly in cases where user terminals require access to different piconets (e.g., with FDMA each terminal requires multiple pulse generators and filters).

Single-band UWB transmitters designed for RDMA systems can potentially better exploit the transmit power level promoted by the FCC (e.g., with FDMA, use of three bands leads to a 5 dB reduction in transmitted power relative to a single-band system, where up to 7.5 GHz bandwidth could be used).

While TDMA systems perform optimally only under strictly synchronous or contention-based access mechanisms using a common time reference, RDMA based systems offer optimal collision probability features without a common time base and independent of the status of synchronism between users.

In contrast to TDMA systems, the RDMA scheme is equally well suited for applications based on a single-cell network and overlapping multiple piconets.

Similar to CDMA systems, RDMA schemes are also well suited to support multiple-user access within a single-cell network or across overlapping piconets. However, RDMA based systems achieve this performance with potentially less complex circuit implementations, particularly for acquisition, synchronization and tracking of received signals.

Similar to CDMA devices, RDMA based devices are also compatible with low-voltage integrated circuit (IC) process technology, particularly when using relatively high duty cycle signals (e.g., to obtain low peak-to-average power ratios). However, in contrast to CDMA, RDMA does not necessarily require to transmit multiple pulses per symbol, thereby offering higher data rates with a lower pulse rate compared to the corresponding chip rate of CDMA.

The concept of using an RDMA signal set to obtain an overall improved multiple access (MA) scheme can be combined with any of the MA techniques outlined above. For MA systems and devices based on UWB-RT, it appears particularly beneficial to combine the basic RDMA principles with that of PRS or CDMA-type sequences. For example, if a relatively low data rate suffices to support an application, then the basic MA mechanism can be provided by RDMA signals while overlaid PRS or CDMA-type sequences can be exploited to add further improvements in the area of MAI or ICI robustness.

Compared to TH-PPM schemes, where acquisition and timing synchronization of TH-PRS are inherently complex (i.e., requiring large circuits and associated large power consumption), RDMA based MA schemes of less complexity and with better performance can be realized for high pulse rates.

Although the *spectral properties* of transmitted RDMA signals can in principle be made identical to those of CDMA signals, the design of many components within a RDMA based system are significantly less complex than in a CDMA system.

Multiple-user wireless systems based on the RDMA scheme can be implemented with or without power control, depending on specific application requirements.

**Description of the Drawings**

Preferred embodiments of the invention are described in detail below, by way of example only, with reference to the following schematic drawings.

Fig. 1 illustrates a typical multiple-user communication network operating within a single communication cell, comprising M user terminals whose transmitters send signals to a single access point (AP), where the receiver is capable of receiving and distinguishing any one of the $M$ users, for example, user $i$ ($U_i$).

Fig. 2 shows a block diagram model for user-to-AP (up-stream) transmission within the typical multiple-user communication cell as shown in Fig. 1, comprising M user terminals (transmitters) and a single access point (receiver) capable of receiving and distinguishing any one of the M users, for example, user $i$.

Fig. 3 shows an example of three idealized pulsed RDMA signals, originated by users 1, 2 and 3, at the output of the receiver filter for desired user 2.

Fig. 4 shows a block diagram of a preferred embodiment of an apparatus for the generation of pulsed RDMA signals for a general user $m$, where said apparatus generates the user's specific period (relative prime) number $N_m$.

Fig. 5 shows an example of two constant or near-constant average rate RDMA signals originated by users 1 and 2 and generated by the apparatus shown in Fig. 6, where each signal is based on two matching period numbers that are alternately changed after a predetermined number of pulses (after seven pulses in this example).

Fig. 6 shows a block diagram of a preferred embodiment of an apparatus for the generation of constant or near-constant average rate RDMA signals for a general user $m$, where said apparatus generates the user's specific matched pair of period numbers $\{N_{m,1}; N_{m,2}\}$.

Fig. 7 shows a logical flow diagram that defines a method (algorithm) to generate a basic set of relative prime numbers, also called period numbers $\{N_m, m=1,2,...,M\}$.

Fig. 8 shows a further logical flow diagram that defines a method (algorithm) to generate sets of matched pairs of relative prime numbers, also called period numbers $\{(N_{m,1}; N_{m,2}), m= 1, 2, ...,M\}$.

Fig. 9 illustrates a typical multiple-user communication network operating bidirectionally, where an access point (AP) device comprises a transceiver for i) receiving and distinguishing any one of the M users and ii) transmitting to any one of the M users or an individual user.

## Description of Preferred Embodiments

In the following, a multiple-user access system with rate division multiple access (RDMA) signals is described for the use with radio-frequency. For reasons of simplicity, the description is only given for systems using the UWB radio channel, however, the system is also applicable to optical (infrared) signals.

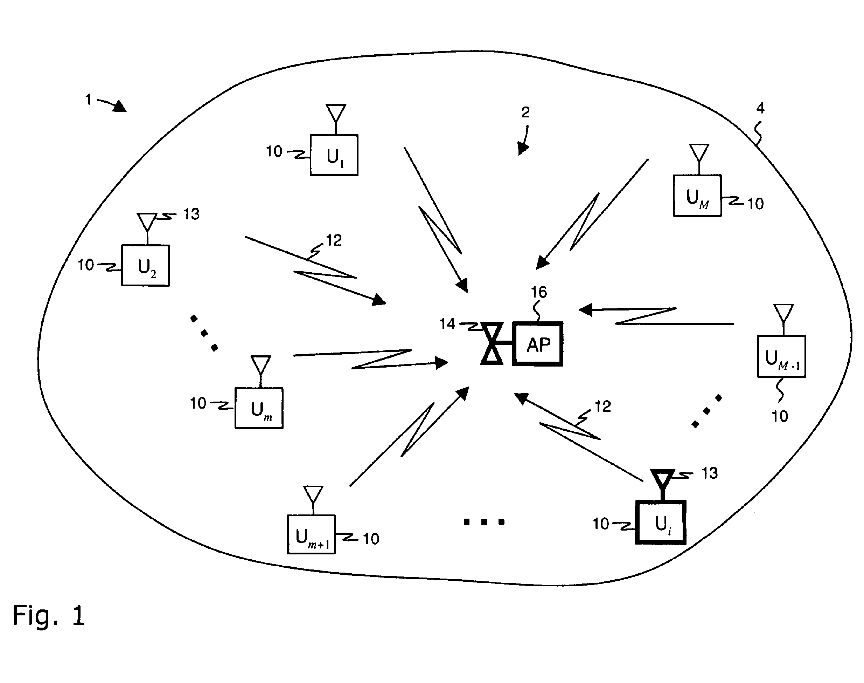

As a first example, a multiple-user communication system 1 as illustrated in Figure 1 is considered that comprises M transmitters 10, each herein also called "user" or user device 10, and a single access point device 16, hereafter also called "receiver" or single access point receiver 16, capable of receiving any one of the M different users. In general, the time instant of the beginning of the transmission of each user is chosen arbitrarily and not coordinated in any way; this operating mode is also referred to as "non-synchronous" operation. The data sequences transmitted by the M different users are considered to be statistically independent. The users are indexed with numbers $m \in M = \{1,2,...,M\}$ and the desired user is identified by the index $m = i$. The signals emitted by the different users carry independent data sequences and propagate over individual air interface channels 12 defined between (the feed point) of a user's transmitter antenna 13 and the receiver's antenna 14 (feed point), where all received signals are superimposed (added). The receiver's task is to detect and reproduce the data sequence transmitted by the desired user, e.g., the data transmitted by user $i$ as indicated in Fig. 1. The latter illustrates a typical multiple-user communication network 2, operating within a single communication cell 4 and comprising the M users (transmitters) and the access point receiver 16, also labeled with AP, capable of receiving any one of the M users.

Within the description, the same reference numbers or signs are used to denote the same parts or the like.

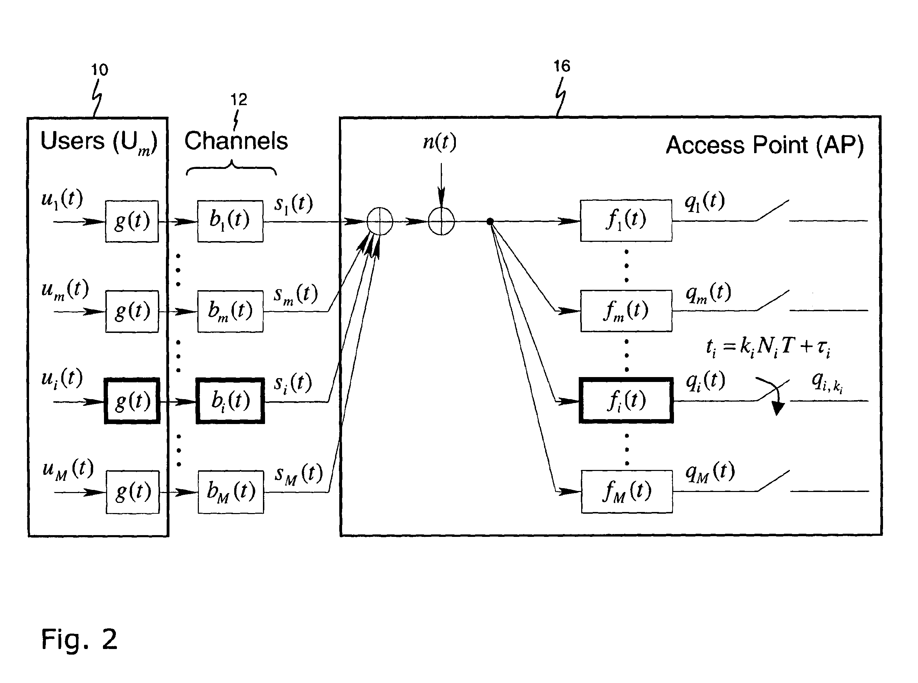

Figure 2 shows a more formal block diagram model of the multiple-user communication system 1, which will be used hereafter to describe the RDMA scheme.

User $m$ modulates the data sequence $a_{m,k} \in \{-1,+1\}$ onto a sequence of delta pulses generating the signal

$$u_m(t) = \sqrt{E_p^t} \sum_{k_m=-\infty}^{\infty} a_{m,k} \delta\left(t - k_m T_m - \tau_m\right), \qquad (1)$$

where $T_m$ is the $m$-th user's pulse period determining the pulse rate, $1/T_m$, that enables the receiver to distinguish the data sequence transmitted by user $m$. Without loss of generality the ordering of the user-specific pulse periods is defined as $T_1 \leq T_2 \leq ... \leq T_M$. The time shift $\tau_m$, also called asynchronous delay, accounts for the relative delay time between the instant at which user $m$ starts its transmission and the time instant at which user $i$ starts its transmission, hence $\tau_i = 0$. Considering a worst-case scenario and for the sake of simplicity, it shall be assumed that the asynchronous delays $\tau_m$, $m \neq i$, are uniformly distributed random variables in the intervals [0, $T_m$) and that the respective signal propagation delay is implicitly contained in each $\tau_m$. The signals $u_m(t)$ are passed through the transmit filters with pulse shapes $g(t)$ and fed to the corresponding transmitter antennas 13, from where they propagate through the respective channels 12 with impulse responses $\{b_m(t), m=1,2,...,M\}$. It is also assumed that the pulse energy $\|g(t)\|^2$ is unity, such that $E_p^t$ is the transmitted energy per pulse in the case of binary antipodal modulated pulses. Similarly, the received energy per pulse is defined as $E_{p,m}^r = \alpha_m^2$, where $\alpha_m = \|b_m(t)\|$ is the gain of the m-th channel.

At the receiver antenna's feed point the signals $s_m(t)=h_m(t)*u_m(t)$, $m=1, 2,..., M$, are superimposed and a white Gaussian noise signal n(t) with two-sided power spectral density $N_0/2$ is added, where the $h_m(t)$ are the received pulse shapes $h_m(t)=b_m(t)*g(t)$ and '*' is the convolution operator. Thus, the noisy received signal is given by the expression

$$y(t) = \sum_{m=1}^{M} s_m(t) + n(t). \qquad (2)$$

The receiver contains a receiver filter with the impulse response $f_i(t)$ with unit energy whose output signal $q_i(t)=f_i(t)*y$

($t$) is sampled with the pulse rate $1/T_i$ at times $t=k_iT_i$ (assuming $\tau_i=0$) and where $k_i$ is an integer. The sampling unit is assumed to be perfectly synchronized with the corresponding user signal. For convenience, the short-hand notation $q_{i,k_i}$ ($k_iT_i$) is defined, which can be represented as the sum

$$q_{i,k_i} = \overline{q}_{i,k_i} + w_{i,k_i} + z_{i,k_i}, \qquad (3)$$

consisting of the sampled desired signal

$$\overline{q}_{i,k_i} = f_i(t) * s_i(t)\big|_{t=k_iT_i}, \qquad (4)$$

the co-user interference term

$$w_{i,k_i} = \sum_{m=1,m\neq i}^{M} q_{i,m}(t)\Bigg|_{t=k_iT_i}, \qquad (5)$$

with $q_{i,m}(t) = f_i(t) * S_m(t)$, and the additive noise term

$$z_{i,k_i} = f_i(t) * n(t)\big|_{t=k_iT_i}. \qquad (6)$$

The sequence terms $\{z_{i,k_i}\}$ are uncorrelated if the support of the receiver filter impulse response $f_i(t)$ is smaller than $T_i$. The sampled signal $q_{i,k_i}$ is fed to a threshold detector (also called "slicer") generating the binary decision $\hat{a}_{i,k_i} = \text{sgn}(q_{i,k_i})$. Note that the optimum receiver filter $f_i(t)$ is equivalent to the matched filter $h_i(-t)$ only if the multiple-user interference terms $\{w_{i,k_i}\}$ are uncorrelated and Gaussian distributed. It can be shown that this is generally by no means the case, especially in the situation where power control is missing.

Given an assumed number of users, M , a relevant factor when defining the operation of a corresponding RDMA system is the generation of an optimum set of pulse rates $\{1/T_m, m=1, 2, ...,M\}$ or, equivalently, pulse periods $\{T_m, m=1,2,...,M\}$, that enable multiple-user communication with the least possible bit error probability (BEP) when the receiver detects user $i$ The BEP is determined by the statistics of the multiple-user interference terms $\{w_{i,k_i}\}$ at sampling instant $t = k_iT_i$. It can be deduced from eqs. (1) and (5) that their statistics depend on many system parameters, among them on the received pulse shape $h_m(t)$. Because of a possible missing feedback channel from the receiver to the transmitter (user), it is assumed that only *a priori* known system properties can impact the procedure for determining the optimal set of pulse rates. This means that the received pulse shapes $\{h_m(t)\}$ and the receiver filter's impulse response $f_i(t)$, possibly adapted to the present received pulse shape, cannot directly be considered for optimizing user-specific pulse rates.

*Collisions Caused by a Single User*

The preferred approach for finding the optimal user-specific pulse rates i) assumes that the pulse $\varphi_{f_i,h_m}(t)=f_i(t)*h_m(t)$ has a fixed support, $\Delta_m$, such that $\varphi_{f_i,h_m}(t)=\rho\neq0$ for $-\Delta_m/2\leq t<\Delta_m/2$ and zero otherwise, and ii) minimizes $P_c(i)$, the probability of a collision between the signals of the desired user $i$ and at least one interfering user $j\neq i$ at the time $t=k_iT_i$; such a collision occurs if and only if the signal of user $j$ is nonzero at time instant $k_iT_i$. In addition to having a minimum collision probability at time instant $k_iT_i$ it is desirable, that user $j$ does not collide with user $i$ at the subsequent sampling instance $(k_i+1)T_i$, i.e., collisions should not occur in clusters; this implies that the following conditions should be met:

$$\mathop{\forall}_{\substack{i\neq j \\ i,j\in M}} \left|T_i - T_j\right| \geq \Delta_j, \qquad (7)$$

where M represents the integer numbers {1, 2, 3, ..., *M*}. Based on these assumptions and using probability analysis, the following design steps for determining the pulse periods {$T_j$} emerge:

*Step 1*: Chose the time base period *T* as a real number and as short as possible; in practice, the minimum value of *T* is constrained by the available technology (e.g., minimum available clock period);

*Step 2:* Given the integer number $N_1$, choose the integer numbers $N_j$, such that they are relatively prime and |$N_j$ - $N_i$| ≥ $\Delta_j$/*T*, where *i* ≠ *j* and *i, j* ∈ M ;

*Step 3:* Determine the set of pulse periods as {$T_j$ = $N_j T$, *j* ∈ M}.

These design rules lead to the following system properties:

1) The maximum collision probability, $\hat{P}_c$(i, j), is minimized;
2) The collision probability is robust against variations (tolerance) of the asynchronous delay, $\tau_m$, and the pulse support duration, $\Delta_m$ ;
3) Collision clusters do not occur.

When the set of user-specific pulse rates, i.e., the set {1/$T_m$,*m*=1,2,...,*M*}, of a given RDMA system is required to be scalable for all pulse rates by an arbitrary factor x, then a new set of relative prime numbers {$N_m$}, previously also called period numbers, is generally required for a given scaling factor x. This condition arises because T can generally not be made smaller, since it was already designed as small as possible following *Step 1* of the design rules. Thus, the only parameters generally available for adapting the pulse rates are the relative prime numbers {$N_m$}. However, with *x*>1 and *x* being a real number, a more elegant solution than providing a new set of relative prime numbers {$N_m$}, is to replace the time base T by the scaled time base *T'=xT.* In doing so, the first design rule, requesting that T be as small as possible is not maintained. It follows that the resulting relative maximum collision probability is upper bounded by

$$\frac{\hat{P}_C(i,j)}{\overline{P}_C(i,j)} = \left( \left\lceil \frac{D_j}{x} \right\rceil \frac{x}{D_j} \right) < \left( 1 + \frac{x}{D_j} \right), \qquad (8)$$

where $\overline{P}_c$(*i, j*) and $\hat{P}_c$(*i, j*) are, respectively, the averaged and maximized collision probabilities over all asynchronous delays. It follows further that the collision probability becomes the more dependent on the asynchronous delay $\tau_j$, the lower the pulse rates are or, equivalently, the larger x is; however, as long as x is much smaller than $D_j$, this effect is negligible.

*Collisions Caused by Multiple Users*

The previous section stated the collision probability resulting from a MA system with only two users, denoted as $P_c$(*i, j*). In the following, the collision probability for a general MA system is given, $P_c$(*i*), where the signal of at least one user *j* ∈ M , *j* ≠ *i*, collides with the signal of the desired user *i*. The analysis is simplified by the fact that the events of user *j* and user *j', j* ≠ *j', j, j'* ∈ *M* and *j, j'* ≠ *i*, colliding with user *i* are statistically independent. Based on this property and after much further analysis, it can be deduced that the average probability of collision, $\overline{P}_c$(*i*), is given by the expression

$$\overline{P}_C(i) = 1 - \prod_{\substack{j=1 \\ j \ne i}}^{M} \left( 1 - \frac{\Delta_j}{T_j} \right). \qquad (9)$$

*RDMA with User-Independent Throughput*

A specific feature of RDMA as described above is that each of the *m* ∈ M users transmits with a different pulse rate 1/$T_m$, *m=1,2,...,M* , or, equivalently, pulse period $T_m$, *m=1,2,...,M,* for distinguishing their signals at the receiver. Thus, depending on the throughput needs of the users, a matching pulse rate can be assigned to each user, under the constraint that no user pair can operate with the same pulse rate. However, in certain applications, it may be desirable to obtain equal - or at least nearly equal - average pulse rates for all users. In the following, methods are disclosed to achieve an equal - or approximately equal - average throughput for every user $m$.

One approach to make the average throughput of every user approximately the same, is to divide the data sequences (also called "packets") into blocks and to transmit odd and even blocks with a lower and a higher pulse rate, respectively, such that the resulting average pulse rate becomes equal - or nearly equal - for each user. One obtains the low and high pulse rates by using the numbers $N_{m,1}$ and $N_{m,2}$, respectively, where $N_{m,2} > N_{m,1}$. Since the numbers $N_{m,1}$ and $N_{m,2}$ are subject to certain constraints, an equal average pulse rate is obtained by a corresponding choice of the block size $B_{m,1}$ for the odd numbered blocks and $B_{m,2}$ for the even numbered blocks, such that the average pulse rate for user m, $\overline{PR}(m)$, becomes

$$\overline{PR}(m) = \frac{B_{m,1} + B_{m,2}}{N_{m,1}TB_{m,1} + N_{m,2}TB_{m,2}} \, . \tag{10}$$

Based on information sent in an appropriate packet header, a receiver will know *a priori* the period numbers, $N_{m,1}$ and $N_{m,2}$, as well as the corresponding block sizes $B_{m,1}$ and $B_{m,2}$, such that the receiver's synchronization units can keep track of the correct sampling instances. One effect on the collision probability is that it is high during times where a large number of users transmit with high rate and vice versa; therefore, the collision probability will vary over time. However, when a large number of users are active and these users are not synchronized, an averaging effect will occur and the collision probability will be nearly constant over time. If short block lengths are used, then the switching from one pulse rate to the other occurs more often, and effects occurring during pulse rate transitions may become relevant. In the one extreme case, where the data blocks consist of only a single bit, the distances between pulses with odd or even index, are almost the same for all users as they have all about the same average pulse rate. This extreme situation does not result in a proper RDMA signal set and should thus be avoided in any practical system design. Larger block lengths or sizes result in desirable infrequent pulse rate changes and therefore excessive collisions can be avoided. It should be noted that the user-specific period numbers $N_{m,1}$ and $N_{m,2}$ are employed exclusively (i.e., their multiplicity within the set of period numbers is one), therefore they may have arbitrarily large common divisors, while they should not share common divisors with any period number $N_{m,x}$ of another user. The second extreme case of operation entails alternating use of different period numbers for successively transmitted packets by a user $m$, for example, odd numbered packets may be transmitted by using period number $N_{m,1}$ and even numbered packets use period number $N_{m,2}$.

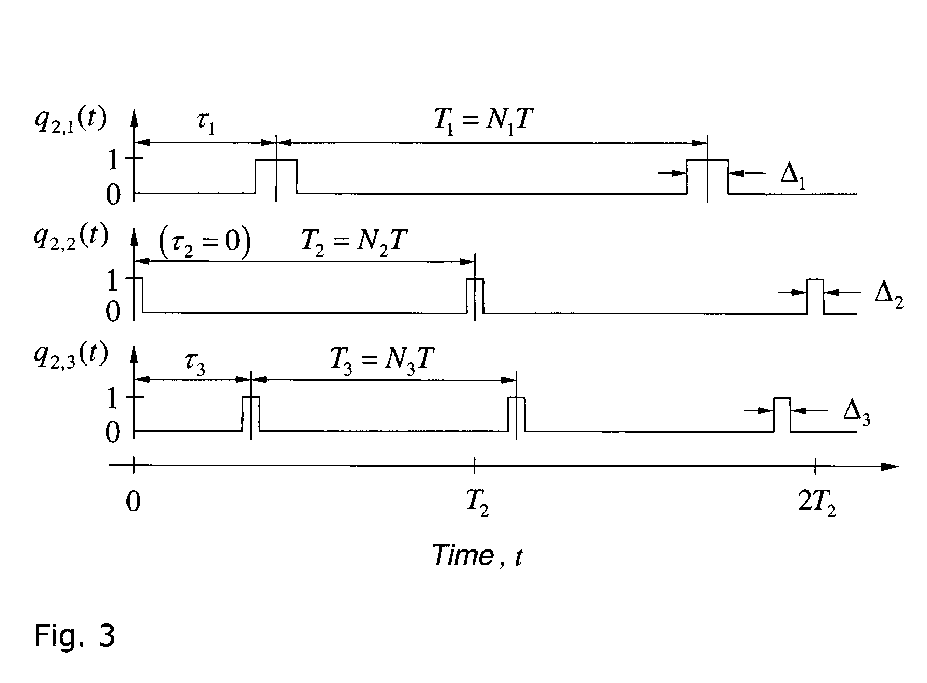

Figure 3 shows an example of three idealized, pulsed RDMA signals, $q_{2,1}(t)$, $q_{2,2}(t)$ and $q_{2,3}(t)$, which are the components of the signal $q_2(t)$ associated with user 2, as obtained within the access point receiver 16 just before being sampled; the signal originating from the second user is considered the reference signal in this example ($\tau_2 = 0$).

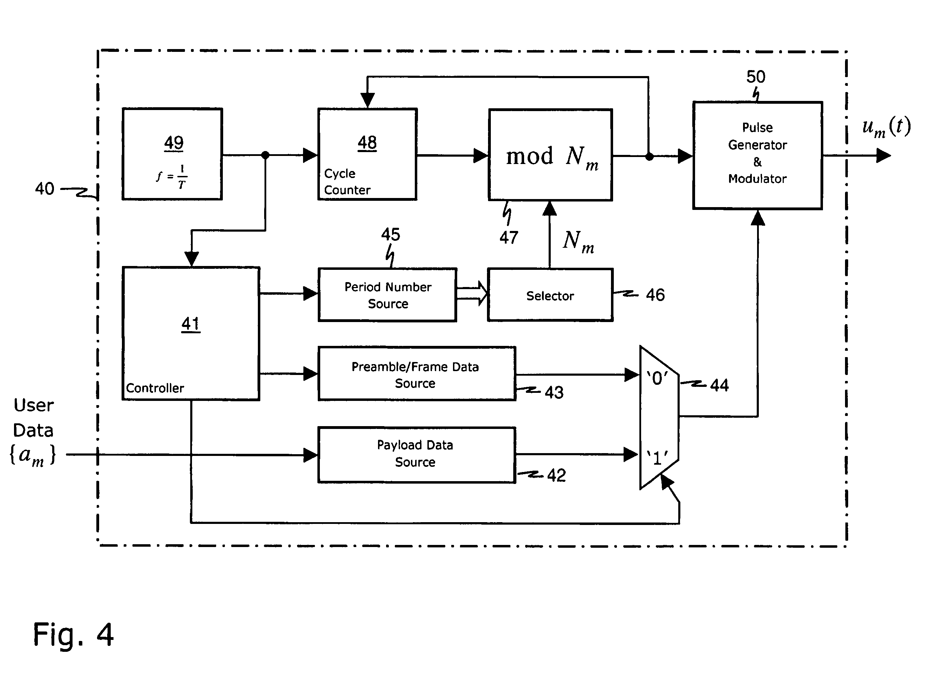

Figure 4 shows a preferred embodiment of an apparatus 40 that generates the type of transmitter signals which lead to corresponding received signals as illustrated in Fig. 3 and where said apparatus 40 contains the source for the user's specific period (relative prime) number $N_m$. The apparatus 40 comprises a controller 41 that is connected to a multiplexer 44, a preamble/frame data source unit 43, and a period number source unit 45. A payload data source unit 42 receives as input user data $\{a_m\}$. The multiplexer 44 is controlled by the controller 41 and switches either the received input from the preamble/frame data source unit 43 or the payload data source unit 42 to its output, which is forwarded to a pulse generator & modulator 50. An oscillator 49 provides its frequency $f = 1/T$ to the controller 41 and a cycle counter 48. The period number source unit 45 is connected to a selector unit 46 for choosing the user's specific period (relative prime) number $N_m$. The specific period (relative prime) number $N_m$, as indicated in the figure, is forwarded to a modulus calculator 47 that also receives input from the cycle counter 48 and calculates mod $N_m$. The output signal of the modulus calculator 47 is fed-back to the cycle counter 48 and is used by the pulse generator & modulator 50 to generate the transmission signal $u_m(t)$.

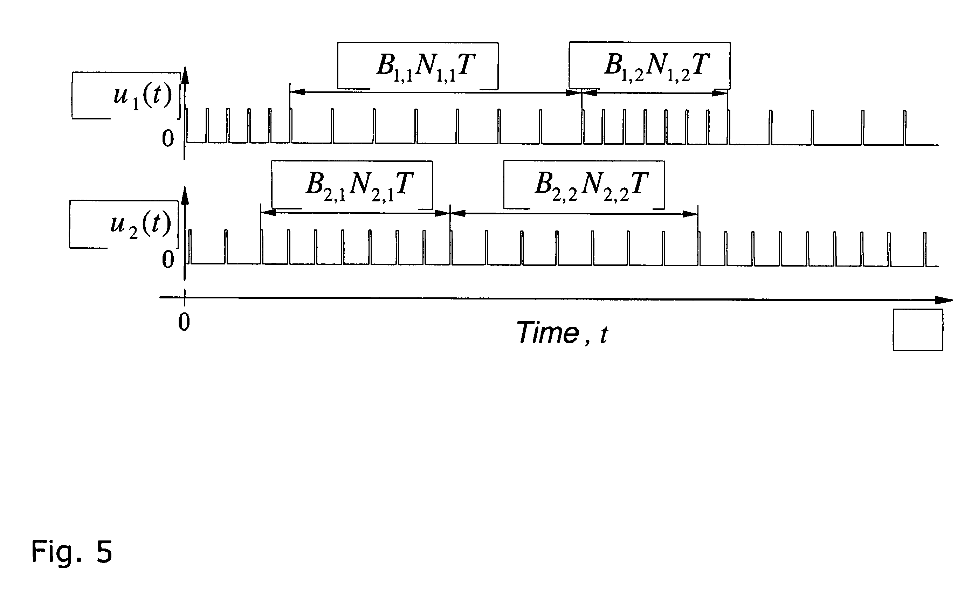

Figure 5 illustrates how RDMA signals can be combined to obtain constant or near-constant average rate RDMA signals. The example shown applies to two user signals, $u_1(t)$ and $u_2(t)$, where for illustrative purposes each data block consists of seven pulses (e.g., for binary modulated pulses, this corresponds to seven bits), i.e., $B_{1,1} = B_{2,1} = B_{1,2} = B_{2,2} = 7$. The two period numbers for the first user $u_1$ are $\{N_{1,1}, N_{2,1}\} = \{10, 20\}$ and for the second user $u_2$ they are $\{N_{1,2}, N_{2,2}\} = \{13, 17\}$. In this example both users achieve the same average pulse rate, i.e., $\overline{PR}(1) = \overline{PR}(2) = 1/(15T)$, because block lengths or sizes are equal and the respective sums of the matched period numbers sums are equal, i.e., $N_{1,1} + N_{2,1} = N_{1,2} + N_{2,2} = 30$.

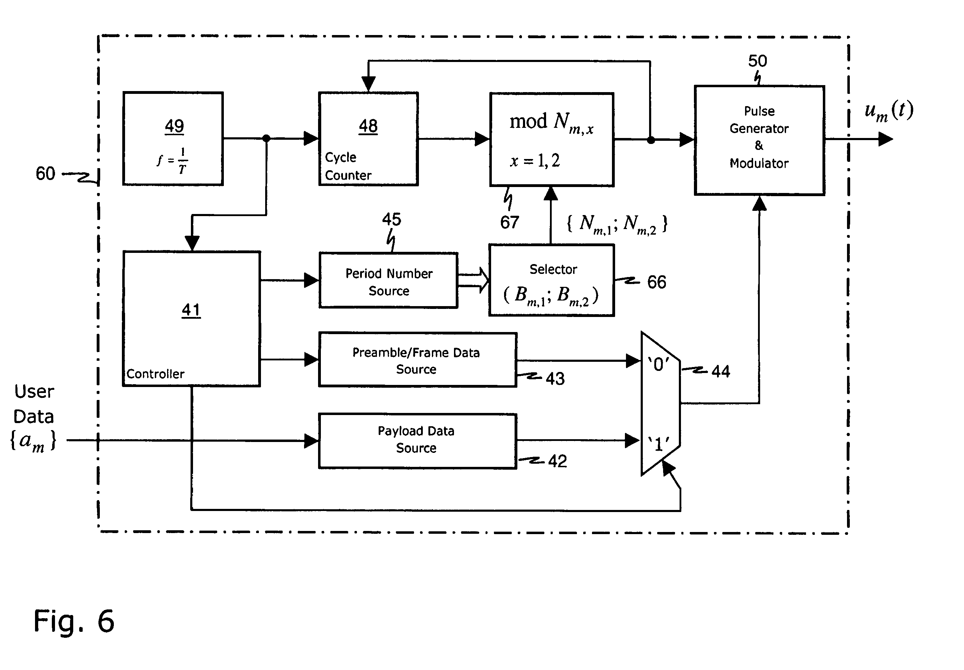

Figure 6 shows a preferred embodiment of an apparatus 60 that generates the type of signals illustrated in Fig. 5, where said apparatus contains the source for generating the user's specific matched pair of period numbers $\{N_{m,1}; N_{m,2}\}$. The configuration of the apparatus 60 is identical to the one described with reference to Fig. 4 for the apparatus 40 with the difference of a modified selector unit 66 which outputs the user's specific matched pair of period numbers $\{N_{m,1}; N_{m,2}\}$ based on provided block sizes $(B_{m,1}; B_{m,2})$ to a modified modulus calculator 67. The modified modulus calculator 67 calculates mod $N_{m,x}$, where x = 1, 2.

*Method to Generate Relative Prime Numbers for RDMA Systems*

The availability of an appropriate set of period numbers, for example the set $\{N_m, m=1,2,...,M\}$ for the support of up to $M$ users, is basic for RDMA systems to work properly.

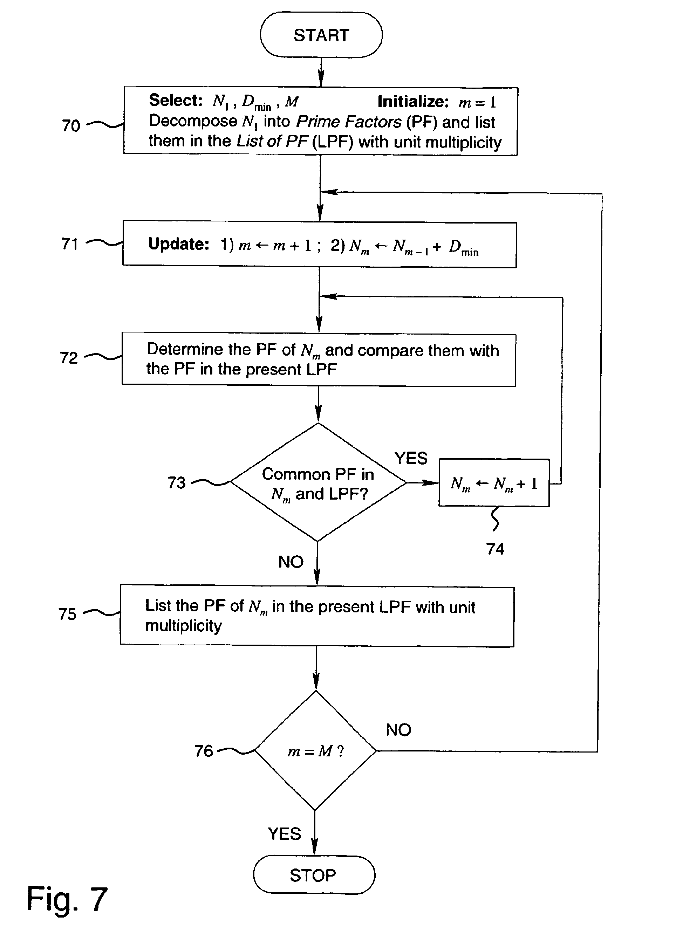

A preferred algorithmic method to generate a basic set of relative prime numbers $N_m$ is shown in Fig. 7 by means of a flow diagram. As indicated with box 70 a first (smallest) period number $N_1$, a minimal distance $D_{min}$, and the number M are selected. Further, $m = 1$ is initialized and the first period number $N_1$ is decomposed into prime factors (PF). The prime factors (PF) are listed in a list of prime factors (LPF) with unit multiplicity. Box 71 indicates the following updates: 1) $m \leftarrow m +1$; 2) $N_m \leftarrow N_{m-1} + D_{min}$. Then, as indicated in box 72, the prime factors (PF) of $N_m$ are determined and compared with the prime factors in the present list of prime factors (LPF). As indicated beside by decision box 73, the result of the comparison is either YES or NO. If the result is YES, then $N_m$ is increased by one as indicated in box 74 and the algorithm goes back to box 72. Otherwise, as indicated with box 75, the prime factors (PF) of $N_m$ are listed in the present list of prime factors (LPF) with unit multiplicity. As indicated with decision box 76, the numbers $m$ and $M$ are compared and if $m = M$ then the algorithm stops, otherwise the algorithm goes back to box 71. This algorithmic method generates an ascending sequence of $M$ relative prime numbers $N_m$, such that $N_1 < N_2 <... < N_m < N_{m+1} <... < N_M$ and $N_m + D_{min} \leq N_{m+1}$, where the difference between successive numbers (also called distance), $N_{m+1} -N_m$, is minimized under the constraint $N_{m+1} -N_m \geq D_{min}$ for all $m$. The smallest period number $N_1$ and the minimal distance $D_{min}$ are input parameters to the algorithm as illustrated in Fig. 7.

*Method to Generate Relative Prime Numbers for Constant or Near-Constant Average Rate RDMA Systems*

Two sets of related period numbers are used, i.e., $\{N_{m, 1}, m = 1, 2, ..., M\}$ and $\{N_{m, 2}, m = 1, 2, ..., M\}$, for constant or near-constant average rate RDMA systems to work properly.

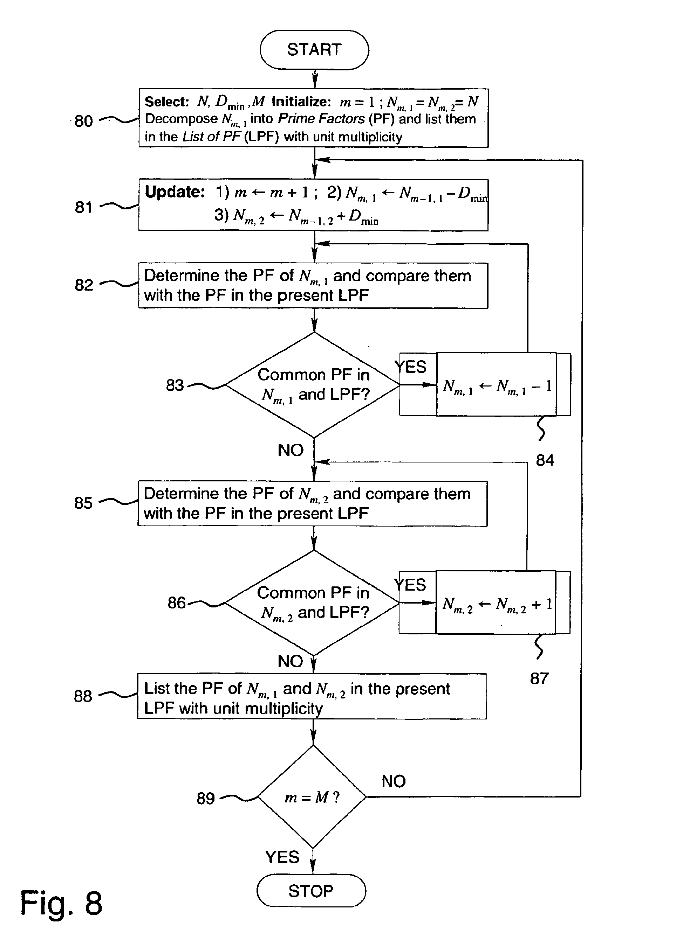

A preferred algorithmic method to generate suitable sets of period numbers is shown in Fig. 8 by means of a flow diagram. As indicated in box 80, an average period number $N$, the minimal distance $D_{min}$, and the number of users M are input parameters to the algorithm. Further, $m = 1$; $N_{m,1} = N_{m,2} = N$ are initialized and $N_{m,1}$ is decomposed into prime factors (PF). The prime factors (PF) are listed in the list of prime factors (LPF) with unit multiplicity. Box 81 indicates the following updates: 1) $m \leftarrow m +1$; 2) $N_{m, 1} \leftarrow N_{m-1, 1} -D_{min}$; 3) $N_{m, 2} \leftarrow N_{m-1,2} +D_{min}$. Then, as indicated with box 82, the prime factors (PF) of $N_{m, 1}$ are determined and compared with the prime factors in the present list of prime factors (LPF). As indicated beside by decision box 83, the result of the comparison is either YES or NO. If the result is YES, then $N_{m,1}$ is updated as $N_{m,1} \leftarrow N_{m,1} - 1$ as indicated in box 84 and the algorithm goes back to box 82. Otherwise, as indicated with box 85, the prime factors (PF) of $N_{m,2}$ are determined and compared with the prime factors in the present list of prime factors (LPF). As indicated beside the decision box 86, the result of the comparison is either YES or NO. If the result is YES, then $N_{m,2}$ is updated as $N_{m,2} \leftarrow N_{m,2} + 1$ as indicated in box 87 and the algorithm goes back to box 85. Otherwise, as indicated with box 88, the prime factors (PF) of $N_{m,1}$ and $N_{m,2}$ are listed in the present list of prime factors (LPF) with unit multiplicity. As indicated with decision box 89, the numbers $m$ and $M$ are compared and if $m = M$ then the algorithm stops, otherwise the algorithm goes back to box 81. Here, the algorithm generates a descending value sequence $\{N_{m, 1}, m = 1, 2, ..., M\}$, and an ascending value sequence $\{N_{m, 2}, m = 1, 2, ..., M\}$, each consisting of M relative prime numbers and with initialization values $N_{1,1} = N_{1,2} = N$, where $N$ corresponds (approximately) to the average period number. Elements generated by this algorithm of both, the ascending and the descending sequence do *not* share any common prime number, except for elements having the same index $m$. Since the pulse rates with the same indices $m$ are used alternately at different times, this is compliant with the design rules for determining the period numbers. The distance between two successive elements in the period number sequences is at least $D_{min}$. Ideally, the sum $N_{m,1} + N_{m, 2} \approx 2N$ does not depend on $m$ and this property would assure constant average pulse rates for balanced data block sizes, i.e., when $D_{m,1} = D_{m,2}$. The average period number $N$, the minimal distance $D_{min}$ and the number of users M are input parameters to the algorithm as illustrated in Fig. 8.

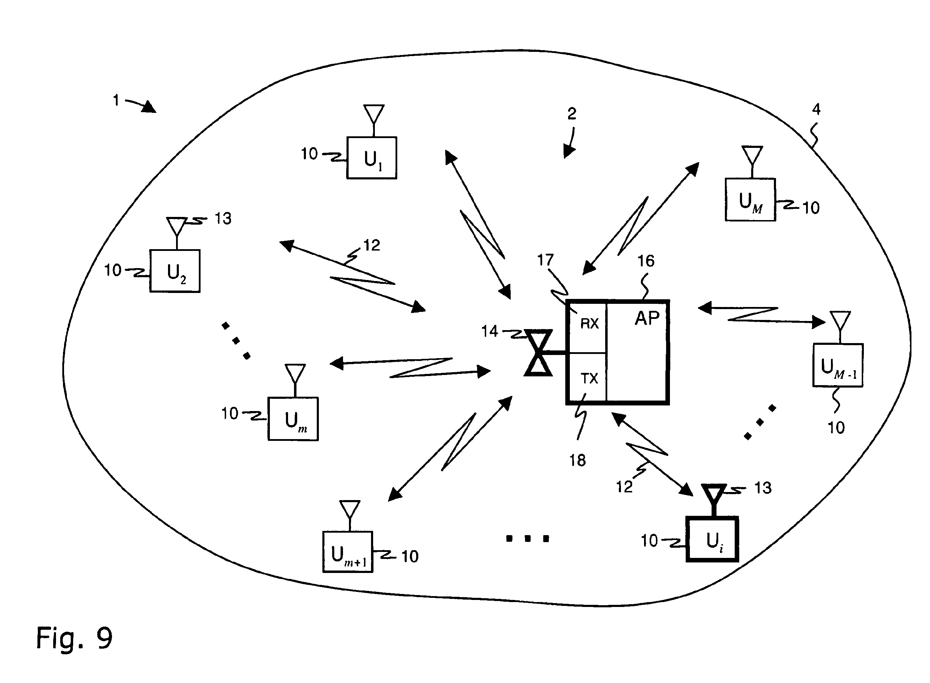

Figure 9 illustrates a multiple-user communication system similar to the system described with reference to Fig. 1. As illustrated, the access point (AP) device 16 comprises besides a receiver 17, labeled with RX, a transmitter 18, labeled with TX, together forming a transceiver. The receiver 17 allows receiving and distinguishing of any one of the M users. The transmitter 18 can generate individual pulse rates $1/T_m$ in order to communicate with each individual user $M$. That means each individual user device 10 can be addressed or reached by the access point (AP) device 16 by using the user-specific pulse rate, allowing bi-directional operation or communication with transmission signals having the user-specific pulse rate. In a further embodiment, the transmitter 18 generates a transmit signal with a common pulse rate $1/T_{AP}$ that is receivable by the multiple user devices 10. It is assumed that the user devices 10 have receiving means implemented, i.e. a user-device receiver is adapted to receive and interpret the signals with the common pulse rate $1/T_{AP}$. This allows a broadcast via channels 12 to all individual user devices 10, whilst each individual user device 10 can be reached by the access point (AP) device 16 via transmission signals having the user-specific pulse rate. In another embodiment, the individual user devices 10 communicate with each other on their specific pulse rates. In yet a further embodiment, the access point (AP) device 16 controls and assigns the user-specific pulse rates to the individual user devices 10.

Table 1 below provides a number example for RDMA systems with A) different user pulse rates and B) near-constant (average) pulse rates, for the following design parameters:

• Number of users: $M$ = 32; Time base: $T$ = 1 ns; Support of received, filtered pulses: $\Delta_m = \Delta$ = 50 ns for all $m$ ; Minimum distance: $D_{min} = \Delta/T$ = 50; $1/T_1$ = 200'000 pulses/s; $N_1 = T_1/T$ = 5'000.

Table 1

| User $m$ | A) Different Pulse Rates | | B) Near-constant Pulse Rates | | |
|---|---|---|---|---|---|
| | $N_m$ | $1/(N_m T)$ [Pulses/s] | $N_{m,1}$ | $N_{m,2}$ | $2/[(N_{m,1} + N_{m,2})T]$ [Pulses/s] |
| 1 | 5001 | 199960 | 5001 | 5001 | 199960 |
| 2 | 5051 | 197980 | 4951 | 5051 | 199960 |
| 3 | 5101 | 196039 | 4901 | 5101 | 199960 |
| 4 | 5152 | 194099 | 4850 | 5152 | 199960 |
| 5 | 5203 | 192197 | 4799 | 5203 | 199960 |
| 6 | 5255 | 190295 | 4747 | 5261 | 199840 |
| 7 | 5309 | 188359 | 4691 | 5321 | 199760 |
| 8 | 5363 | 186463 | 4639 | 5371 | 199800 |
| 9 | 5413 | 184740 | 4583 | 5429 | 199760 |
| 10 | 5471 | 182781 | 4523 | 5479 | 199960 |
| 11 | 5521 | 181126 | 4463 | 5531 | 200120 |
| 12 | 5573 | 179436 | 4409 | 5581 | 200200 |
| 13 | 5623 | 177841 | 4357 | 5639 | 200080 |
| 14 | 5683 | 175963 | 4307 | 5689 | 200080 |
| 15 | 5737 | 174307 | 4253 | 5741 | 200120 |
| 16 | 5791 | 172682 | 4201 | 5791 | 200160 |
| 17 | 5843 | 171145 | 4139 | 5843 | 200360 |
| 18 | 5893 | 169693 | 4079 | 5893 | 200561 |
| 19 | 5947 | 168152 | 4027 | 5953 | 200400 |
| 20 | 6001 | 166639 | 3967 | 6007 | 200521 |
| 21 | 6053 | 165207 | 3917 | 6067 | 200320 |
| 22 | 6109 | 163693 | 3863 | 6121 | 200320 |
| 23 | 6161 | 162311 | 3811 | 6173 | 200320 |
| 24 | 6211 | 161005 | 3761 | 6229 | 200200 |
| 25 | 6263 | 159668 | 3709 | 6287 | 200080 |
| 26 | 6313 | 158403 | 3659 | 6337 | 200080 |
| 27 | 6367 | 157060 | 3607 | 6389 | 200080 |
| 28 | 6421 | 155739 | 3557 | 6449 | 199880 |
| 29 | 6473 | 154488 | 3503 | 6521 | 199521 |
| 30 | 6529 | 153163 | 3449 | 6571 | 199600 |
| 31 | 6581 | 151953 | 3391 | 6631 | 199561 |

(continued)

| User $m$ | A) Different Pulse Rates | | B) Near-constant Pulse Rates | | |
|---|---|---|---|---|---|
| | $N_m$ | $1/(N_mT)$ [Pulses/s] | $N_{m,1}$ | $N_{m,2}$ | $2/[(N_{m,1} + N_{m,2})T]$ [Pulses/s] |
| 32 | 6637 | 150670 | 3331 | 6689 | 199601 |

Any disclosed embodiment may be combined with one or several of the other embodiments shown and/or described. This is also possible for one or more features of the embodiments. The present invention can be realized in hardware, software, or a combination of hardware and software.

**Claims**

1. A method for communicating via transmission signals ($u_m(t)$) in a multiple-user communication system (1) comprising multiple user devices (10) and an access point device (16), each of the transmission signals having a defined pulse rate $1/T_m$, with $T_m$ being the pulse period and $m$ = 1, 2, 3, ... $M$, and having the same pulse width, the method comprising the steps of:

   generating a first transmission signal ($u_1(t)$) comprising a first pulse rate $1/T_1$ for a first user device ($U_1$) to communicate to the access point device (16); and
   for each additional user device ($U_i$), generating yet a further transmission signal ($u_i(t)$) comprising yet a further pulse rate $1/T_i$ that is different to each other pulse rate $1/T_m$ in use, with $i$ = 1, 2, 3, ... $M$, where $m \neq i$, to communicate with the access point device (16),

   **characterized in that** the method further comprises the step of:

   choosing the pulse period $T_m$, where the pulse period $T_m$ is a product of a base period T and an integer value $N_m$, such that the integer value $N_m$ comprises at least one prime factor (PF) that is unique among the sets of prime factors (PF) of any other integer value $N_m$.

2. Method according to claim 1, further comprising the step of differentiating the transmission signals of the multiple user devices (10) based on the pulse rate ($1/T_i$) of received transmission signals ($S_i(t)$) at the access point device (16).

3. Method according to claim 1 or 2, wherein each integer value $N_m$ comprises a set of prime factors (PF) and the intersection of at least two sets of prime factors is empty.

4. Method according to claim 1, 2 or 3, wherein the prime factors of any new integer number $N_m$ are generated by choosing their prime factors to be different to the prime factors in an updated list of prime factors (LPF).

5. Method according to any preceding claim, further comprising generating the transmission signal ($u_m(t)$) for each user device ($U_m$) with at least two different pulse rates ($1/T_{m,1}$, $1/T_{m,2}$).

6. A multiple-user communication system (1) for communicating via transmission signals ($u_m(t)$) comprising:

   an access point device (16) for receiving the transmission signals ($u_m(t)$) from multiple user devices (10), each of the transmission signals having a defined pulse rate $1/T_m$, with $T_m$ being the pulse period and $m$ = 1, 2, 3, ... $M$, and having the same pulse width;
   a first user device ($U_1$) for which a first transmission signal ($u_1(t)$) comprising a first pulse rate $1/T_1$ is generated for communicating to the access point device (16); and
   additional user devices $\Delta(U_i)$ for each of which yet a further transmission signal ($u_i(t)$) comprising yet a further pulse rate $1/T_i$ that is different to each other pulse rate $1/T_m$ in use is generated, with $i$ = 1, 2, 3, ... $M$, where $m \neq i$, to communicate to the access point device (16),

   wherein the access point device (16) differentiates the multiple user devices (10) based on the pulse rate $1/T_i$ of received transmission signals ($s_i(t)$), and
   **characterized in that** the pulse period $T_m$, which is a product of a base period T and an integer value $N_m$, is chosen

such that the integer value $N_m$ comprises at least one prime factor (PF) that is unique among the sets of prime factors (PF) of any other integer value $N_m$.

**7.** An ultra-wideband (UWB) radio system comprising the multiple-user communication system according to claim 6.

**8.** An infrared (IR) communication system comprising the multiple-user communication system according to claim 6.

**9.** An access point device (16) for receiving transmission signals ($u_m(t)$) from multiple user devices (10), each of the transmission signals having a defined pulse rate $1/T_m$, with $T_m$ being the pulse period and $m$ = 1, 2, 3, ... $M$, and having the same pulse width, comprising:

a receiver (17) that detects from received transmission signals ($s_m(t)$) a first user device ($U_1$) for which a first transmission signal ($u_1(t)$) comprising a first pulse rate $1/T_1$ is generated and each additional user device ($U_i$) for which yet a further transmission signal ($u_i(t)$) comprising yet a further pulse rate $1/T_i$ that is different to each other pulse rate $1/T_m$ in use is generated, with $i$ = 1, 2, 3, ... $M$, where $m \neq i$,

**characterized in that** the pulse period $T_m$, which is a product of a base period T and an integer value $N_m$, is chosen such that the integer value $N_m$ comprises at least one prime factor (PF) that is unique among the sets of prime factors (PF) of any other integer value $N_m$.

**10.** The access point device (16) according to claim 9, further comprising a transmitter (18) that generates individual pulse rates $1/T_m$ to communicate with each individual user device (10).

**11.** The access point device (16) according to claim 10, wherein the transmitter (18) generates a transmit signal with a common pulse rate ($1/T_{AP}$) that is receivable by the multiple user devices (10) having receiving means implemented.


**Patentansprüche**

**1.** Verfahren zur Datenübertragung mittels Übertragungssignalen ($u_m(t)$) in einem Datenübertragungssystem (1), das mehrere Benutzereinheiten (10) und eine Zugriffspunkteinheit (16) umfasst, wobei jedes der Übertragungssignale eine definierte Impulsrate $1/T_m$ mit der Impulsperiode $T_m$ und $m$ = 1, 2, 3, ... , $M$ aufweist, wobei jedes der Übertragungssignale dieselbe Impulsbreite aufweist und das Verfahren die folgenden Schritte umfasst:

Erzeugen eines ersten Übertragungssignals ($u_1(t)$), das eine erste Impulsrate $1/T_1$ für eine erste Benutzereinheit ($U_1$) zur Datenübertragung zur Zugriffspunkteinheit (16) umfasst; und
für jede weitere Benutzereinheit ($U_i$) Erzeugen noch eines weiteren Übertragungssignals ($u_i(t)$), das noch eine weitere von jeder bereits verwendeten Impulsrate $1/T_m$ verschiedene Impulsrate $1/T_i$ mit $i$ = 1, 2, 3, ..., $M$ und $m \neq i$ zur Datenübertragung an die Zugriffspunkteinheit (16) umfasst,

**dadurch gekennzeichnet, dass** das Verfahren weiterhin noch den folgenden Schritt umfasst:

Auswählen der Impulsperiode $T_m$, wobei die Impulsperiode $T_m$ gleich dem Produkt aus einer Basisperiode T und einer ganzen Zahl $N_m$ ist, derart, dass die ganze Zahl $N_m$ mindestens einen Primzahlfaktor (PF) umfasst, der in den Sätzen der Primzahlfaktoren (PF) aller anderen ganzen Zahlen $N_m$ nur einmal vorkommt.

**2.** Verfahren nach Anspruch 1, das ferner den Schritt des Unterscheidens der Übertragungssignale der mehreren Benutzereinheiten (10) anhand der Impulsrate ($1/T_i$) der an der Zugriffspunkteinheit (16) empfangenen Übertragungssignale ($s_i(t)$) umfasst.

**3.** Verfahren nach Anspruch 1 oder 2, bei dem jeder ganzzahlige Wert $N_m$ einen Satz Primzahlfaktoren (PF) umfasst und die Schnittmenge von mindestens zwei Sätzen von Primzahlfaktoren leer ist.

**4.** Verfahren nach Anspruch 1, 2 oder 3, bei dem die Primzahlfaktoren jeder neuen ganzen Zahl $N_m$ so gewählt werden, dass sie von den Primzahlfaktoren in einer aktualisierten Liste der Primzahlfaktoren (LPF) verschieden sind.

**5.** Verfahren nach einem der vorhergehenden Ansprüche, das ferner das Erzeugen des Übertragungssignals ($u_m(t)$) für jede Benutzereinheit ($U_m$) mit mindestens zwei unterschiedlichen Impulsraten ($1/T_{m,1}$, $1/T_{m,2}$) umfasst.

**6.** Datenübertragungssystem (1) mit mehreren Benutzern zur Datenübertragung mittels Übertragungssignalen ($u_m(t)$), wobei das Datenübertragungssystem ferner Folgendes umfasst:

eine Zugriffspunkteinheit (16) zum Empfangen der Übertragungssignale ($u_m(t)$) von mehreren Benutzereinheiten (10), wobei jedes der Übertragungssignale eine definierte Impulsrate $1/T_m$ mit der Impulsperiode $T_m$ und $m = 1, 2, 3, ..., M$ und dieselbe Impulsbreite aufweist;
eine erste Benutzereinheit ($U_1$), für die ein erstes Übertragungssignal ($u_1(t)$), das eine erste Impulsrate $1/T_1$ umfasst, zur Datenübertragung zur Zugriffspunkteinheit (16) erzeugt wird; und
weitere Benutzereinheiten ($U_i$), für die jeweils ein weiteres Übertragungssignal ($u_i(t)$), das noch eine weitere von jeder anderen bereits verwendeten Impulsrate $1/T_m$ verschiedene Impulsrate $1/T_i$ mit $i = 1, 2, 3, ..., M$ und $m \neq i$ umfasst, erzeugt wird, um Daten an die Zugriffspunkteinheit (16) zu übertragen,

wobei die Zugriffspunkteinheit (16) die mehreren Benutzereinheiten (10) anhand der Impulsrate $1/T_i$ der empfangenen Übertragungssignale ($S_i(t)$) unterscheidet, und
**dadurch gekennzeichnet, dass** die Impulsperiode $T_m$, welche gleich dem Produkt aus einer Basisperiode T und einer ganzen Zahl $N_m$ ist, so gewählt wird, dass der ganzzahlige Wert $N_m$ mindestens einen Primzahlfaktor (PF) umfasst, der in den Sätzen der Primzahlfaktoren (PF) aller anderen ganzzahligen Werte $N_m$ nur einmal vorkommt.

**7.** Ultrabreitband-Funksystem (UWB), welches das Datenübertragungssystem mit mehreren Benutzern nach Anspruch 6 umfasst.

**8.** Infrarot(IR)-Datenübertragungssystem, welches das Datenübertragungssystem mit mehreren Benutzern nach Anspruch 6 umfasst.

**9.** Zugriffspunkteinheit (16) zum Empfangen von Übertragungssignalen ($u_m(t)$) von mehreren Benutzereinheiten (10), wobei jedes der Übertragungssignale eine definierte Impulsrate $1/T_m$ mit der Impulsperiode $T_m$ und $m = 1, 2, 3, ..., M$ und derselben Impulsbreite aufweist und die Zugriffspunkteinheit Folgendes umfasst:

einen Empfänger (17), der aus den empfangenen Übertragungssignalen ($s_m(t)$) eine erste Benutzereinheit ($U_1$) erkennt, für welche ein erstes Übertragungssignal ($u_1(t)$) mit einer ersten Impulsrate $1/T_1$ erzeugt wird, und jede weitere Benutzereinheit ($U_i$) erkennt, für die noch ein weiteres Übertragungssignal ($u_i(t)$) mit einer weiteren von jeder anderen bereits verwendeten Impulsrate $1/T_m$ verschiedenen Impulsrate $1/T_i$ mit $i = 1, 2, 3, ..., M$ und $m \neq i$ erzeugt wird,

**dadurch gekennzeichnet, dass** die Impulsperiode $T_m$, welche ein Produkt aus einer Basisperiode T und einem ganzzahligen Wert $N_m$ ist, so gewählt wird, dass der ganzzahlige Wert $N_m$ mindestens einen Primzahlfaktor (PF) umfasst, der in den Sätzen der Primzahlfaktoren (PF) aller anderen ganzzahligen Werte $N_m$ nur einmal vorkommt.

**10.** Zugriffspunkteinheit (16) nach Anspruch 9, die ferner einen Sender (18) umfasst, der individuelle Impulsraten $1/T_m$ zum Datenaustausch mit jeder einzelnen Benutzereinheit (10) erzeugt.

**11.** Zugriffspunkteinheit (16) nach Anspruch 10, bei welcher der Sender (18) ein Übertragungssignal mit einer gemeinsamen Impulsrate ($1/T_{AP}$) erzeugt, das durch die mehreren Benutzereinheiten (10) empfangen werden kann, in denen ein Empfangsmittel installiert ist.

**Revendications**

**1.** Procédé de communication par le biais de signaux de transmission ($u_m(t)$) dans un système de communication à utilisateurs multiples (1) comprenant de multiples dispositifs d'utilisateurs (10) et un dispositif de point d'accès (16), chacun des signaux de transmission présentant une cadence d'impulsions $1/T_m$, $T_m$ étant l'intervalle d'impulsions et m = 1, 2, 3, ... M, et présentant la même largeur d'impulsion, le procédé comprenant les étapes consistant à :

générer un premier signal de transmission ($u_1(t)$) présentant une première cadence d'impulsions $1/T_1$ pour un premier dispositif d'utilisateur ($U_1$) pour communiquer avec le dispositif de point d'accès (16), et
pour chaque dispositif d'utilisateur supplémentaire ($U_i$), générer encore un autre signal de transmission ($u_i(t)$) présentant encore une autre cadence d'impulsions $1/T_i$ qui est différente de chacune des autres cadences d'impulsions $1/T_m$ en utilisation, avec i = 1, 2, 3, ... M, où m ≠ i, pour communiquer avec le dispositif de point d'accès (16),

**caractérisé en ce que** le procédé comprend en outre l'étape consistant à :

choisir l'intervalle d'impulsions $T_m$, où l'intervalle d'impulsions $T_m$ est un produit d'un intervalle de base et d'une valeur entière $N_m$, de sorte que la valeur entière $N_m$ comprenne au moins un facteur premier (PF) qui est unique parmi les ensembles de facteurs premiers (PF) de n'importe quelle autre valeur entière $N_m$.

2. Procédé selon la revendication 1, comprenant en outre l'étape consistant à différentier les signaux de transmission des multiples dispositifs d'utilisateurs (10) sur la base de la cadence d'impulsions ($1/T_i$) des signaux de transmission reçus ($s_i(t)$) au niveau du dispositif de point d'accès (16).

3. Procédé selon la revendication 1 ou 2, dans lequel chaque valeur entière $N_m$ comprend un ensemble de facteurs premiers (PF) et l'intersection d'au moins deux ensembles de facteurs premiers est vide.

4. Procédé selon la revendication 1, 2 ou 3, dans lequel les facteurs premiers de tout nouveau nombre entier $N_m$ sont générés en choisissant les facteurs premiers de sorte qu'ils soient différents des facteurs premiers dans une liste de facteurs premiers (LPF) mise à jour.

5. Procédé selon l'une quelconque des revendications précédentes, comprenant en outre la génération du signal de transmission ($u_m(t)$) pour chaque dispositif d'utilisateur ($U_m$) avec au moins deux cadences d'impulsions différentes ($1/T_{m,1}$, $1/T_{m,2}$).

6. Système de communication à utilisateurs multiples (1) destiné à communiquer par le biais de signaux de transmission ($u_m(t)$) comprenant :

un dispositif de point d'accès (16) destiné à recevoir les signaux de transmission ($u_m(t)$) provenant de multiples dispositifs d'utilisateurs (10), chacun des signaux de transmission présentant une cadence d'impulsions définie $1/T_m$, $T_m$ étant l'intervalle d'impulsions et m = 1, 2, 3, ... M, et présentant la même largeur d'impulsion, un premier dispositif d'utilisateur ($U_1$) pour lequel un premier signal de transmission ($u_1(t)$) présentant une première cadence d'impulsions $1/T_1$ est généré pour communiquer avec le dispositif de point d'accès (16), et des dispositifs d'utilisateurs supplémentaires ($U_i$) pour chacun desquels encore un autre signal de transmission ($u_i(t)$) présentant encore une autre cadence d'impulsions $1/T_i$ qui est différente de chaque autre cadence d'impulsions $1/T_m$ en utilisation est généré, avec i = 1, 2, 3, ..., M, où m ≠ i, pour communiquer avec le dispositif de point d'accès (16),

dans lequel le dispositif de point d'accès (16) différentie les multiples dispositifs d'utilisateurs (10) sur la base de la cadence d'impulsions $1/T_i$ des signaux de transmission reçus ($S_i, (t)$), et **caractérisé en ce que** l'intervalle d'impulsions $T_m$, qui est un produit d'un intervalle de base T et d'une valeur entière $N_m$, est choisi de sorte que la valeur entière $N_m$ comprenne au moins un facteur premier (PF) qui est unique parmi les ensembles de facteurs premiers (PF) de toute autre valeur entière $N_m$.

7. Système radio à bande ultralarge (UWB) comprenant le système de communication à utilisateurs multiples selon la revendication 6.

8. Système de communication à infrarouge (IR) comprenant le système de communication à utilisateurs multiples selon la revendication 6.

9. Dispositif de point d'accès (16) destiné à recevoir des signaux de transmission ($u_m(t)$) de multiples dispositifs d'utilisateurs (10), chacun des signaux de transmission présentant une cadence d'impulsions définie $1/T_m$, $T_m$ étant l'intervalle d'impulsions et m = 1, 2, 3, ..., M et présentant la même largeur d'impulsion, comprenant :

un récepteur (17) qui détecte à partir des signaux de transmission reçus ($S_m(t)$) un premier dispositif d'utilisateur ($U_1$) pour lequel un premier signal de transmission ($u_1(t)$) présentant une première cadence d'impulsions $1/T_1$ est généré et chaque dispositif d'utilisateur supplémentaire ($U_i$) pour lesquels encore un autre signal de transmission ($u_i(t)$) présentant encore une autre cadence d'impulsions $1/T_i$ qui est différente de chacune des autres cadences d'impulsions $1/T_m$ en utilisation est généré, avec i = 1, 2, 3, ... M, où m ≠ i, **caractérisé en ce que** l'intervalle d'impulsions $T_m$, qui est un produit d'un intervalle de base T et d'une valeur

entière $N_m$, est choisi de sorte que la valeur entière $N_m$ comprenne au moins un facteur premier (PF) qui est unique parmi les ensembles de facteurs premiers (PF) de tout autre valeur entière $N_m$.

10. Dispositif de point d'accès (16) selon la revendication 9, comprenant en outre un émetteur (18) qui génère des cadences d'impulsions individuelles $1/T_m$ pour communiquer avec chaque dispositif d'utilisateur individuel (10).

11. Dispositif de point d'accès (16) selon la revendication 10, dans lequel l'émetteur 18 génère un signal de transmission présentant une cadence d'impulsions commune ($1/T_{AP}$) qui peut être reçu par les multiples dispositifs d'utilisateurs (10) comportant le moyen de réception mis en oeuvre.

Fig. 1

Fig. 2

EP 1 661 315 B1

EP 1 661 315 B1

$q_{2,1}(t)$

$\tau_1$     $T_1 = N_1 T$

1

0     $\Delta_1$

$q_{2,2}(t)$

$(\tau_2 = 0)$     $T_2 = N_2 T$

1

0     $\Delta_2$

$q_{2,3}(t)$

$\tau_3$     $T_3 = N_3 T$

1

0     $\Delta_3$

0     $T_2$     $2T_2$

*Time*, $t$

Fig. 3

Fig. 4

Fig. 5

EP 1 661 315 B1

Fig. 6

START

70 — Select: $N_1$, $D_{\min}$, $M$      Initialize: $m = 1$
Decompose $N_1$ into *Prime Factors* (PF) and list them in the *List of PF* (LPF) with unit multiplicity

71 — Update: 1) $m \leftarrow m + 1$ ; 2) $N_m \leftarrow N_{m-1} + D_{\min}$

72 — Determine the PF of $N_m$ and compare them with the PF in the present LPF

73 — Common PF in $N_m$ and LPF?

YES

$N_m \leftarrow N_m + 1$

74

NO

75 — List the PF of $N_m$ in the present LPF with unit multiplicity

76 — $m = M$ ?

NO

YES

STOP

# Fig. 7

START

80 — **Select:** $N$, $D_{min}$, $M$ **Initialize:** $m = 1$ ; $N_{m,1} = N_{m,2} = N$
Decompose $N_{m,1}$ into *Prime Factors* (PF) and list them
in the *List of PF* (LPF) with unit multiplicity

81 — **Update:** 1) $m \leftarrow m + 1$ ; 2) $N_{m,1} \leftarrow N_{m-1,1} - D_{min}$
3) $N_{m,2} \leftarrow N_{m-1,2} + D_{min}$

82 — Determine the PF of $N_{m,1}$ and compare them
with the PF in the present LPF

83 — Common PF in $N_{m,1}$ and LPF?

YES → $N_{m,1} \leftarrow N_{m,1} - 1$

84

NO

85 — Determine the PF of $N_{m,2}$ and compare them
with the PF in the present LPF

86 — Common PF in $N_{m,2}$ and LPF?

YES → $N_{m,2} \leftarrow N_{m,2} + 1$

87

NO

88 — List the PF of $N_{m,1}$ and $N_{m,2}$ in the present
LPF with unit multiplicity

89 — $m = M$ ?

NO

YES

STOP

# Fig. 8

Fig. 9

EP 1 661 315 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 6088347 A

• US 5687169 A

**Non-patent literature cited in the description**

• **L. R. CHEN.** Optical code division multiple access: challenges and solutions. *Proc. SPIE - Int. Soc. Opt. Eng. (USA,* 2002, vol. 4833, 1159-68